# EUROPEAN PATENT SPECIFICATION

(11) **EP 3 526 761 B1**
(45) Date of publication and mention of the grant of the patent: **15.04.2026**
(21) Application number: 17798318.6
(22) Date of filing: 16.10.2017
(51) Int. Cl.: G06Q 10/0635, E02D 29/045, G06Q 50/08, G06Q 10/04, E02D 29/00

(54) **PROCEDURE AND SYSTEM FOR THE CALCULATION OF THE LEVEL OF RISK IN THE PROXIMITY OF THE EXCAVATION FRONT OF AN UNDERGROUND WORK**
VERFAHREN UND SYSTEM ZUR BERECHNUNG DES GEFÄHRDUNGSGRADES IN DER NÄHE DER AUSHUBFRONT EINES UNTERTAGEBAUS
PROCÉDURE ET SYSTÈME DE CALCUL DU NIVEAU DE RISQUE À LA PROXIMITÉ DU FRONT D'EXCAVATION D'UN OUVRAGE SOUTERRAIN

(30) Priority: 14.10.2016 IT 201600103594
(43) Date of publication of application: 21.08.2019
(73) Proprietor: SYSTRA S.p.A., 38123 Trento - Frazione Mattarello (IT)
(72) Inventor: DANZI, Andrea, 38123 Trento - Frazione Mattarello (IT); ECCHER, Gabriele, 38123 Trento - Frazione Mattarello (IT)
(74) Representative: Brunacci, Marco
(86) International application number: PCT/IB2017/056414
(87) International publication number: WO 2018/069905

(56) References cited:
- WO-A2-2014/049310
- CN-A- 102 999 695
- CN-B- 103 016 063
- CN-B- 103 726 851
- US-A1- 2004 199 876
- JOHN A. HUDSON: "Design methodology for the safety of underground rock engineering", JOURNAL OF ROCK MECHANICS AND GEOTECHNICAL ENGINEERING, vol. 4, no. 3, 1 September 2012 (2012-09-01), pages 205 - 214, XP055362099, ISSN: 1674-7755, DOI: 10.3724/SP.J.1235.2012.00205
- DEGN ESKESEN S ET AL: "Guidelines for tunnelling risk management: International Tunnelling Association, Working Group No. 2", TUNNELLING AND UNDERGROUND SPACE TECHNOLOGY, ELSEVIER SCIENCE PUBLISHING, NEW YORK,NY, US, vol. 19, no. 3, 1 May 2004 (2004-05-01), pages 217 - 237, XP004495579, ISSN: 0886-7798, DOI: 10.1016/J.TUST.2004.01.001
- RITA L SOUSA ET AL: "Risk analysis during tunnel construction using Bayesian Networks: Porto Metro case study", TUNNELLING AND UNDERGROUND SPACE TECHNOLOGY, ELSEVIER SCIENCE PUBLISHING, NEW YORK,NY, US, vol. 27, no. 1, 17 July 2011 (2011-07-17), pages 86 - 100, XP028397279, ISSN: 0886-7798, [retrieved on 20110726], DOI: 10.1016/J.TUST.2011.07.003

## Description

### Technical Field

The present invention relates to a procedure and system for the calculation of the level of risk in the proximity of the excavation front of an underground work, such as e.g. a road tunnel, railway tunnel, subway, infrastructure or underground network, hypogeal industrial facility or the like.

### Prior Art

In the context of designing and executing underground works of high complexity, it is necessary to evaluate, monitor and manage the effect produced in the proximity of the excavation front by the creation of underground voids carried out using appropriate excavating machines and methods.

In fact, excavation activities can produce dangerous phenomena, potentially harmful to people and things, caused by the redistribution of the tensions in the landmass due to the creation of voids made by excavating machines.

Risk assessment allows estimating the effects that will be produced prior to excavation and is required in order to choose the best excavating method and define its operating parameters (design phase).

Risk analysis must necessarily quantify and compare heterogeneous phenomena such as, e.g., risk of building site down times, injury to people or damage to things, costs of necessary preparation, time required to complete the work.

Only a balanced comparison of the performance of a particular excavation method with respect to the different types of risk can make possible an aware choice of the best excavation method.

Risks caused by making tunnels depend heavily, not only on the method used, but also on the excavation parameters adopted and the geometry of the tunnel, the nature of the perforated landmass and the depth of the tunnel.

It is therefore evident that the effects of excavation, and consequently the relative risks involved, may also vary considerably in space, i.e., along the layout of the tunnel itself.

Consequently, the accuracy of risk quantification goes hand in hand with the discretization of the analyses conducted.

Finally, another factor of complexity in risk assessment is the uncertainty of the geological parameters and the definition of the stratigraphic profile which strongly influence the quantification of the response effects of the landmass to the excavation.

The degree of indeterminacy of the geological parameters and of the relative stratigraphic profile generally decreases as the excavation proceeds and subsequently also in the operating phase, but it reaches its height in the design phases in which, often, the main decisions have to be taken regarding geometries and excavation methods.

In this complex context, the amounts of responsibility are managed between whosoever commissions the work and whosoever is appointed to complete it.

It is therefore of crucial importance to be able to have risk assessment tools which can, on the one hand, support the design and/or construction decisions in every phase and which, on the other hand, are able to objectively trace the evolution of the risk scenario during the course of development of the underground work.

The conventionally used methods of known type, nevertheless, have evident limits of effectiveness, in particular due to their inability to manage the high complexity of the information to be processed.

In particular, the traditional risk assessment methods require the engineer to timely gather the parameters required to describe the individual hazard phenomena and the subsequent predisposition and execution of those calculations which allow understanding the effects produced.

With reference to the assessment of the risks arising from the variation of the tensional state of the hollow contour, nowadays engineers have various methods available to assess the stability of the excavation front and the hollow, including, for example, the convergence-confinement method proposed by M. Panet in 1995 in "Calcul des tunnels par la méthode de convergence-confinement. Press de l'Ecole Nationale des Ponts et Chaussées, Paris".

In some cases, which the engineer must test on each reference section, Panet's method allows analyzing the behavior of the landmass, strongly influenced by three-dimensional phenomena, with a series of two-dimensional analyses.

For the two-dimensional analyses, the engineer has at disposal formulations in closed form, applicable according to precise hypotheses, or numerical solutions obtainable by the finite element method.

The application of this method requires the engineer to make precise assessments both as regards verification of the hypotheses necessary to use the method and the calculation of the landmass response.

Each single analysis requires a significant processing time, making the practical application of the method rather inefficient if applied extensively to the whole work and considering the actual variability of the geomechanical input parameters.

These activities, though supported by some commercial software, do not always allow large-scale automatic execution of all the assessments needed to define the risks, so the engineer, faced with a computing domain characterized both by numerous elements, all different from one another, and by numerous and nonlinear interlinks, often decides to manage, including on a subjective basis, only a limited set of information, e.g., by drastically limiting the number of analysis sections and, for each section, limiting the possible variability of the geomechanical parameters to one or two combinations considered to be significant.

This limit of efficiency of the traditional methods can also lead to a lack of effectiveness in the assessment of phenomena and the manual activities do not permit detecting situations in which the effects of underground works show properties not directly understandable on the basis of the laws which govern the geological, mechanical and structural components taken individually.

Relevant documents include:
CN 102 999 695 A,
CN 103 016 063 B,
CN 103 726 851 B.

All of these documents describe similar systems already known in the art.

### Description of the Invention

The main aim of the present invention is to provide a procedure and a system for the calculation of the level of risk in the proximity of the excavation front of an underground work that allows addressing the complexity of problems arising from underground excavation activities, with the aim of ensuring during the execution of the work the choice of solutions that considerably reduce the risks.

Another object of the present invention is to provide a procedure and a system for the calculation of the level of risk in the proximity of the excavation front of an underground work that allows the identification of any "emerging behaviors", i.e., complex behaviors due to the interaction between excavation machines, geotechnical contexts and structures, which are unpredictable and cannot be deduced from the simple summation of interactions detected among individual elements.

Another object of the present invention is to provide a procedure and a system for the calculation of the level of risk in the proximity of the excavation front of an underground work that allows the effective traceability of the evolution of the risk scenario during the lifespan of the works.

The aforementioned objects are achieved by the present system for the calculation of the level of risk in the proximity of the excavation front of an underground work, according to claim 1.

The aforementioned objects are achieved by the present procedure for the calculation of the level of risk in the proximity of the excavation front of an underground work, according to claim 13.

### Brief Description of the Drawings

Other characteristics and advantages of the present invention will become more evident from the description of a preferred, but not exclusive, embodiment of a procedure and a system for the calculation of the level of risk in the proximity of the excavation front of an underground work, illustrated by way of an indicative, but non-limiting example, in the attached drawings in which:
Figure 1 is a general diagram illustrating the lifespan of an underground work;
Figure 2 is a general diagram illustrating the procedure and system according to the invention;
Figure 3 is a diagram illustrating in detail a system determination unit according to the invention which is adapted to determine the basic parameters needed for calculating the level of risk in the proximity of the excavation front of an underground work;
Figure 4 is a general diagram illustrating a system unit according to the invention used for the application of predefined geo-mechanical and hydro-geological models;
Figure 5 is a general diagram illustrating a system aggregation unit according to the invention used for the representation of the risk synthesis data.

The procedure and the system according to the invention allow for the assessment and comparison of the excavation performance of underground works (e.g., tunnels) with respect to heterogeneous sources of risk and enable the engineer to operate in a guided manner, basing him/herself on the automatic processing of objective data coming both from the geotechnical context and from that of the mechanical and constructive technologies adopted for building the works.

### Embodiments of the Invention

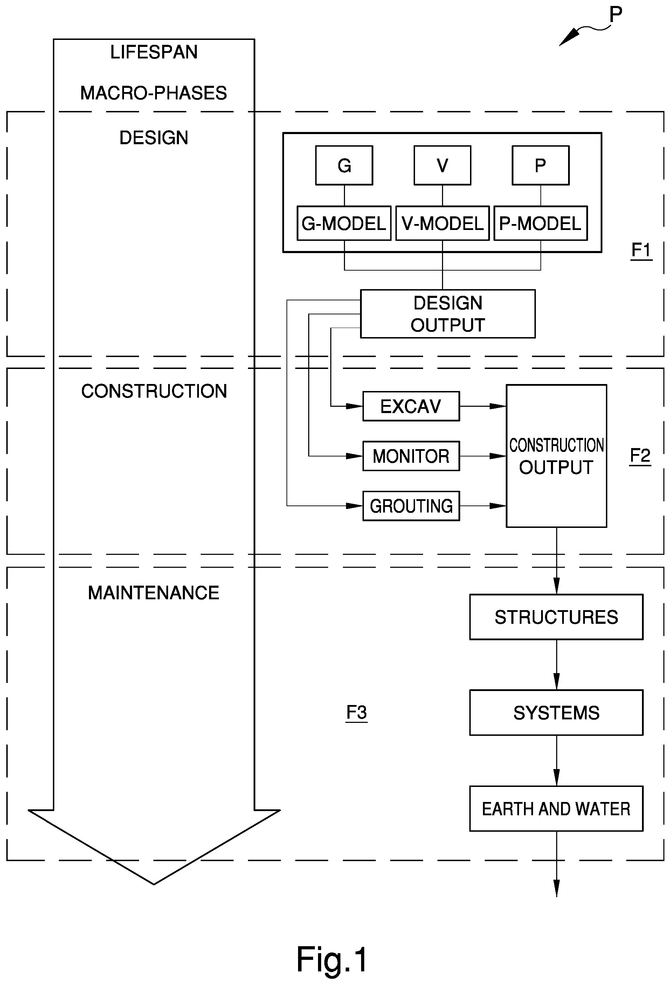

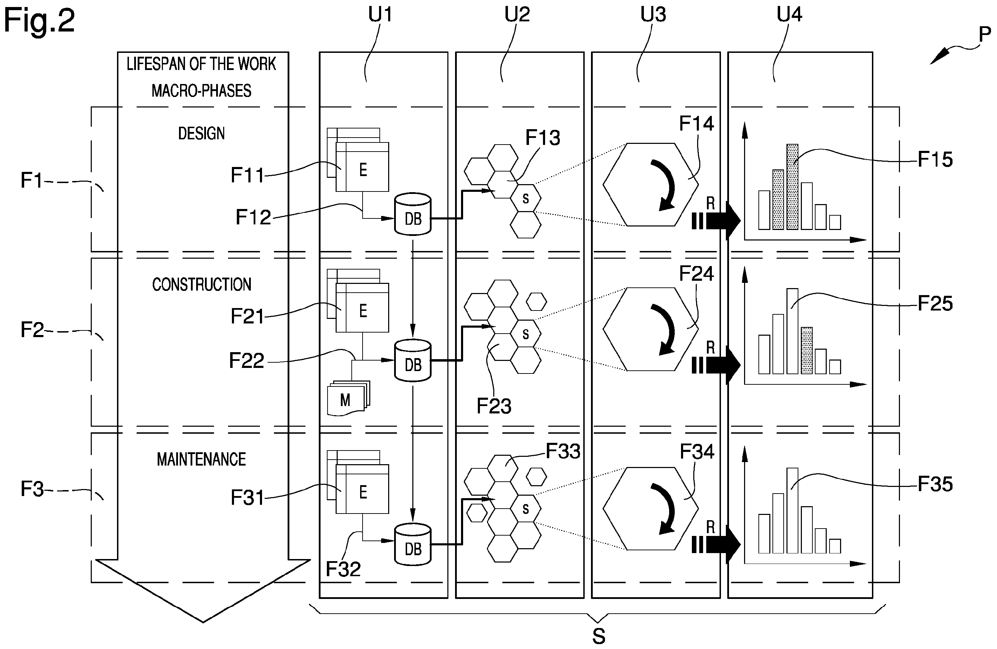

With particular reference to the diagrams in figure 1 and figure 2, a procedure has been globally indicated by P for the calculation of the level of risk in the proximity of the excavation front of an underground work.

This procedure P divides the analysis of the potential risks according to the following three time macro-phases that characterize the lifespan of an underground work:
- one design phase F1 of an underground work;
- one construction phase F2 of the underground work;
- one maintenance phase F3 of the underground work.

Figure 1 schematically illustrates the lifespan of the work.

The design phase F1 goes from the first detection of possible hazardous events to full engineering. In practice, this design phase permits defining the methodology and the envisaged qualitative and functional construction characteristics.

Following the diagram of Figure 1, in design phase F1 the procedure must make assessments that are based on assumptions deriving mainly from technical standards (Eurocode, etc.) and basic data (topographic, geological, logistical, available excavation technologies) with a certain degree of uncertainty.

The design phase F1 comprises the definition of at least one selected analysis model selected from: a geological analysis model (G-model) adapted to analyze geological data (G), a productivity analysis model (P-model) adapted to analyze productivity data (P), an analysis model for miscellaneous (V-model) adapted to analyze data not attributable to previous models (G-model and V-model).

The construction phase F2 recognizes the results produced by design and physically realizes the interventions according to a limited and well-defined expenditure diagram.

During the construction phase F2, the procedure follows assessments based on design assumptions with the confirmation of objective data which is the result of timely monitoring (Monitor), of data from excavation machines (Excav) and of systems for the improvement of geological conditions (Grouting).

The uncertainty of the data in this phase should decrease and the need emerge to compare the performance requirements indicated in the design phase with those determined at the end of the construction phase. This process therefore enables the verification and possible improvement of the implemented predictive models.

The maintenance phase F3 is the phase which allows managing the works once they have come into operation.

During operation, the data are recorded and analyzed in order to maintain the value of the infrastructure over time and to verify its impact in the general context. The performance and safety standard monitoring activities during the operating phase permits tracing risk phenomena, not measurable during construction times, but which must necessarily be taken into account in the design phase.

Figure 2 illustrates in detail the phases F1, F2, F3 of the procedure P according to the invention as well as the main units U1, U2, U3, U4 which constitute the system S for the automated implementation of such procedure.

Specifically, during the design phase F1, the system S performs the sub-phases F11, F12; F13, F14 and F15 by means of the units U1, U2, U3 and U4.

During the construction phase F2, the system S performs the sub-phases F21, F22; F23, F24 and F25 by means of the units U1, U2, U3 and U4.

During the maintenance phase F3, the system S performs the sub-phases F31, F32; F33, F34 and F35 by means of the units U1, U2, U3 and U4.

In particular, the design phase F1 comprises at least one determination phase F11 of a plurality of basic parameters needed for the calculation of the level of risk in the proximity of the excavation front of the underground work.

Such determination phase F11 of the basic parameters is made starting from a plurality of documents in electronic format.

In particular, the determination phase F11 comprises one step of collection of a plurality of documents in electronic format.

Specifically, the documents in electronic format can be composed of:
- "closed format" documents, for which no libraries are available for direct access to the structured data contained in the document itself (e.g., reports and drawings in pdf format);
- "open format" documents, for which libraries are available for direct access to the structured data contained in the document (e.g., calculations in xls format or drawings in dwg format).

The determination phase F11 of the basic parameters also comprises one extraction step E of the text contained in the documents in electronic format.

In particular, such extraction step E involves the recognition of the text contained in the "closed format" documents.

Conveniently, the determination phase F11 comprises one syntactic analysis (data parsing) step of the extracted text for the identification of the basic parameters.

Furthermore, the determination phase F11 comprises at least one normalization step of the basic parameters obtained.

In particular, such normalization step comprises at least one of: at least one data cleaning step, at least one data transforming step and at least one data aggregating step.

By means of the data cleaning step, more specifically, it is possible to standardize the data according to predefined formats such as, e.g., a same reference system or a same international measuring system.

By using the data transforming step, it is possible to subdivide data that are initially aggregated, e.g., with reference to specific sections of a tunnel to be built.

By means of data aggregating, it is possible to aggregate initially separate data. With reference to the specific solution claimed, the data aggregating step may be optional.

Advantageously, the design phase F1 comprises a structured storage phase F12 of the generated basic parameters within a database DB. In particular, the database DB consists of a geo-referenced database able to associate each property of the various design elements with a precise geotechnical context.

In particular, the structured storage phase F12 comprises at least one mapping (collection mapping) step between the determined basic parameters and the tables of the database DB.

Furthermore, the structured storage phase F12 comprises one field mapping step for the mapping between the determined basic parameters and the fields of the tables of the database DB.

Finally, the structured storage phase F12 comprises one data loading step of the structured basic parameters S thus obtained on the database DB.

Advantageously, the design phase F1 comprises a definition phase F13 of all possible scenarios which could occur in the proximity of the excavation front of the underground work, starting from the structured basic parameters S stored on the database DB.

The automated definition phase of the possible scenarios involves dividing the components of the underground work into elementary parts, directly attributing to each element the characteristics of the geotechnical context determined by its geographical position.

The product of such definition phase F13 therefore consists of the whole set of geometric, spatial, geo-mechanical and hydro-geological combinations, necessary to characterize, both spatially and statistically, the scenarios in which to subsequently assess risk and performance.

Structured database DB support is crucial to organize information according to the natural development of the work and to establish a sequence of analysis between the elementary components.

Such definition phase F13 provides for the distinction of the elements between analysis dimensions and risk factors. The analysis dimensions are equivalent to keys to identify events, while factors describe the event from a numerical point of view (measurements).

It is crucial to identify the analysis dimension which represents the geometric domain of the work. It must be discretized with a uniform granularity, according to a resolution which allows considering constants within the reference unit as well as the other analysis dimensions attributable to it.

Furthermore, the design phase F1 comprises one application phase F14 for each of the scenarios generated during the definition phase F13, of predefined geo-mechanical and hydro-geological models, for the calculation of a series of possible embodiments for each scenario.

Such phase of application of predefined models permits evaluating the parameters which permit a quantitative measurement of the risk and/or productivity factor of the excavation made using one or more methods and their configurations.

Every possible risk factor is evaluated in terms of impact, coded and classified and recorded in the database.

The analysis dimensions required for the calculation may have a variable degree of uncertainty as may the underlying theoretical formulas, so the process must be able to be supported by analytical methods, numerical simulations and probabilistic approaches.

The procedure performs geo-mechanical and hydro-geological models to generate, starting from the input variables, the parameters that shape the response of the landmass to the excavation, such as, e.g., the closing of the excavation hollow, the tensional state at the front or the inflowing water.

When the analysis domain has heterogeneous parameters, both in dimensional terms and as regards the variability of the statistical properties, the class of computational methods known as the Monte Carlo Method is the most appropriate to obtain estimates through simulations.

The system calculates a series of possible embodiments through N iterations, with the exact weight of probabilities of all possible events, trying to densely explore all the parameter space. The Monte Carlo Method permits associating a probability of occurrence of a precise risk of a given entity with each point of the analysis space.

Finally, the design phase F1 comprises one aggregation phase F15 of punctual evaluations of the level of risk for each possible embodiment, to obtain a synthesis of the risk calculated in the proximity of the excavation front of the underground work.

This aggregation phase F15 involves structuring the analysis dimensions into aggregation level hierarchies. The levels of analysis represent a view of the risk with respect to a well-defined granularity of the analysis dimensions. With the data from the previous phases and structurally available within the database, the procedure involves identifying the parameters which allow allocating the risk factors.

The aggregation phase F15 returns the reprocessing of the simulation data in synthetic formats that are easy to interpret for the human operator. Formats can be both graphic and tabular and are significant for each available aggregation level.

Such reprocessing operations provide effective support to the decision-making phase and constitute traceability elements of the evolution of the risk scenario during the proceeding of the work's lifespan.

As shown schematically in figure 2, the construction phase F2 comprises the sub-phases F21, F22; F23, F24 and F25, similar to the sub-phases F11, F12; F13, F14 and F15 described above for the design phase F1 and implemented by means of the units U1, U2, U3 and U4 of the system S.

In this regard, it is pointed out that the main differences between the analyses carried out during the design phase F1 and the construction phase F2 mainly concern the accuracy of the available data.

In the construction phase F2, in fact, the data comprise data of a general nature through to detailed data specifically applicable to a well-defined portion of the tunnel layout (or of an underground work in general).

The maintenance phase F3 comprises the sub-phases F31, F32; F33, F34 and F35, similar to the sub-phases F11, F12; F13, F14 and F15 described above for the design phase F1 and implemented by means of the units U1, U2, U3 and U4 of the system S.

Specifically, during the work operating phase, information is obtained about the ability of the work to maintain its performance over time. Such information permits ascertaining to what extent the design phase F1 has been exhaustive enough to cover the working lifespan of the work and, consequently, such information can lead to a recalibration of the predictive models used during design.

An example of useful information processed during the maintenance phase F3 could be the data regarding vibrations generated by rail traffic detected on a given structure. Rail traffic over the years could increase, decrease, undergo changes that could generally change the values of the parameters used during the design phase. In order to evaluate the degree of efficiency of the work, which after all is the purpose of maintenance, the models must be able to transpose and process the data acquired during the operating phase.

The system S adapted to perform the procedure P according to the invention is described in detail below.

Specifically, the system S uses software tools, detailed below, to automate the decomposition of the problem, to analyze the individual components and to recompose solutions.

As schematically illustrated in Figure 2, the system S comprises one determination and storage unit U1 of the basic parameters needed for the calculation of the level of risk in the proximity of the excavation front of the underground work.

This unit U1 calculates such basic parameters starting from a plurality of documents in electronic format.

The unit U1 carries out therefore the structured storage of the basic parameters within the database DB.

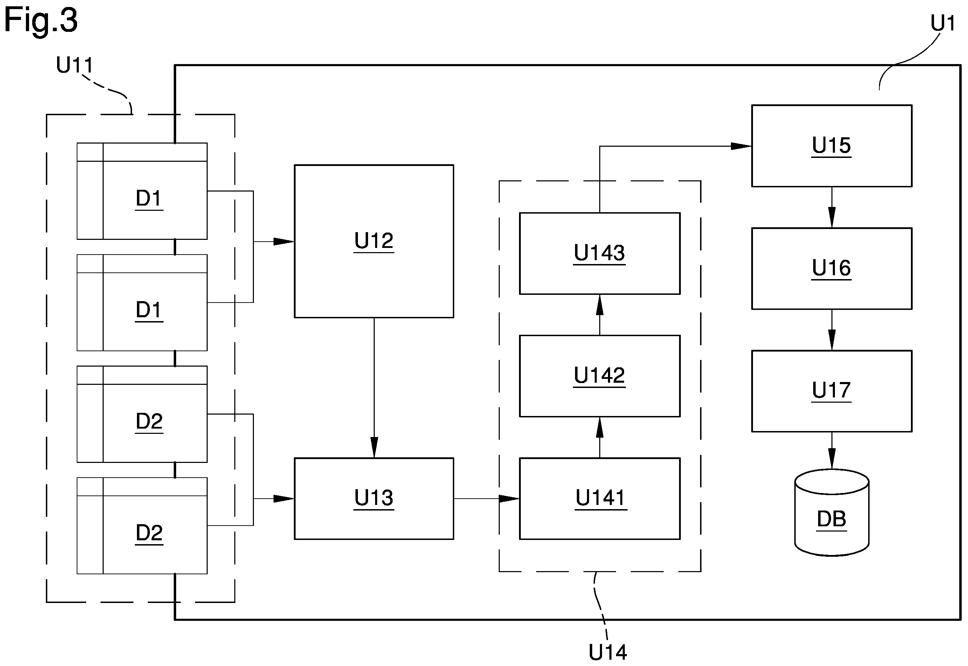

Figure 3 shows schematically the determination and storage unit U1.

In particular, the determination and storage unit U1 comprises collection means U11 of a plurality of documents D1, D2 in electronic format.

In particular, these documents D1, D2 in electronic format comprise:
- "closed format" documents D1, for which no libraries are available for direct access to the structured data contained in the document itself (e.g., reports and drawings in pdf format);
- "open format" documents D2, for which libraries are available for direct access to the structured data contained in the document (e.g., calculations in xls format or drawings in dwg format).

The determination and storage unit U1 comprises extraction means U12 adapted to extract the text contained in the documents D1 in electronic format.

In particular, such extraction means U12 comprise means for recognizing the text contained in said "closed format" documents D1.

Advantageously, the determination and storage unit U1 comprises syntactic analysis (data parsing) means U13 of the extracted text for the identification of the basic parameters.

Usefully, furthermore, the determination and storage unit U1 comprises normalization means U14 of the basic parameters.

In particular, such normalization means U14 preferably comprise at least one of: data cleaning means U141, data transforming means U142 and data aggregating means U143.

The determination and storage unit U1 also comprises collection mapping means U15 between the basic parameters and the tables of the database DB.

Usefully, the determination and storage unit U1 comprises field mapping means U16 for mapping between the basic parameters and the fields of the tables of the database DB.

Furthermore, the determination and storage unit U1 comprises data loading means U17 of the structured basic parameters S on the database DB.

Advantageously, the system 1 also comprises one definition unit U2 of all possible scenarios which could occur in the proximity of the excavation front of the underground work, determined starting with the basic parameters stored on the database DB.

Starting with the data recorded in the database DB from the unit U1, the unit U2 carries out the normalization of the information according to the granularity required by specific analysis models activated for each project and according to the geometric analysis dimension (e.g., suitable analysis steps can be defined every 10m, 20m, etc.).

Advantageously, moreover, the system S comprises one application unit U3, for each of the scenarios generated by the definition unit U2, of predefined geo-mechanical and hydro-geological models, for the calculation of a series of possible embodiments R for each scenario.

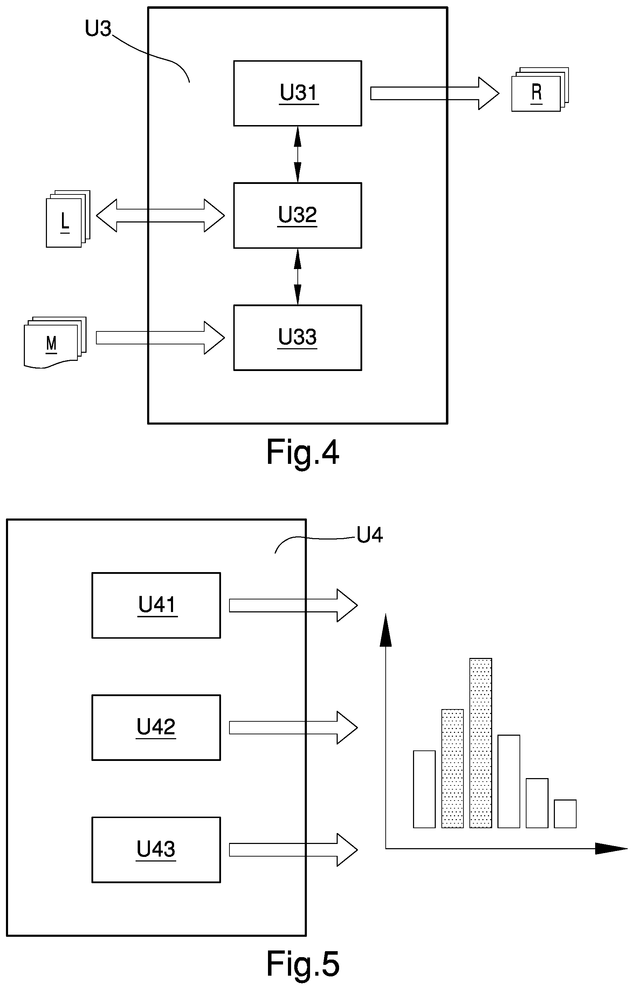

As shown schematically in Figure 4, the application unit U3 of predefined geo-mechanical and hydro-geological models comprises three different types of functional modules U31, U32 and U33 distinguishable on the basis of the nature of the processing.

In particular, the unit U3 comprises at least one analytical module U31 which implements algorithms, able to achieve the possible embodiment R for solving the problem by means of a well-defined mathematical calculation procedure.

Furthermore, the unit U3 comprises at least one interoperability module U32 adapted to operate with external libraries L, capable of integrating inside the unit U3 methods and algorithms made available in various forms by third parties.

Finally, the unit U3 comprises at least one automatic learning module U33, capable of handling monitoring data M as sources for the representation of new information contents.

Advantageously, finally, the system S comprises at least one aggregation unit U4 for the aggregation of punctual evaluations of the level of risk for each possible embodiment determined by the unit U3, to obtain a synthesis of the risk calculated in the proximity of the excavation front of the underground work.

Specifically, as shown schematically in Figure 5, the aggregation unit U4 comprises at least one module U41 for the representation of the synthesis data along analysis dimensions referable to space (profile and plan of the work).

Furthermore, the aggregation unit U4 comprises at least one module U42 for the representation of the synthesis data according to the analysis dimensions needed for the assessment and management of the risks of various nature.

Finally, the aggregation unit U4 comprises at least one module U43 for the interactive analysis of the data organized according to a multi-dimensional model (On-Line Analytical Processing - OLAP).

It has in practice been found that the described invention achieves the intended objects.

In particular, it is emphasized that the innovative procedure and system are characterized by data flows and execution sequences of the automatic type.

Human intervention by the operator is required in the setting and result analysis phases.

Therefore, the procedure and the system according to the invention make it possible to tackle in an automated way the complexity of the problems arising from underground excavation activities, with the aim of ensuring, during the execution of the work, the choice of solutions which considerably reduce risks.

The invention therefore represents an effective system for tracing the evolution of the risk scenario during the lifespan of the works: in the various phases the reliability of the input data will change and the invention will return the corresponding variation of the risk scenario without prejudice to the procedure and the analysis models used.

This also constitutes a valid contractual instrument for determining any liability in case of the occurrence of unforeseeable situations at the time when countermeasures could have been decided.

## Claims

1. A computer implemented system (S) for the monitoring of the level of risk in the proximity of the excavation front of an underground work, comprising
- at least one determination and storage unit (U1) for the determination of a plurality of basic parameters needed for the calculation of the level of risk in the proximity of the excavation front of said underground work, comprising collection means (U11) of a plurality of documents (D1, D2) in electronic format, and for the structured storage of said basic parameters inside a database (DB) wherein said documents (D1, D2) in electronic format comprise:
- "closed format" documents (D1), for which no libraries are available for direct access to the structured data contained in the document itself;
- "open format" documents (D2), for which libraries are available for direct access to the structured data contained in the document
- at least one definition unit (U2) of a plurality of scenarios which could occur in the proximity of an excavation front of said underground work, starting from said basic parameters stored on said database (DB);
- at least one application unit (U3), for each of said scenarios generated during said definition phase, of predefined geo-mechanical and hydro-geological models, for the calculation of a series of possible achievement (R) for each scenario wherein said application unit (U3) comprises at least one automatic learning module (U33) configured for handling monitoring data (M) from excavation machines and of systems for the improvement of geological conditions as sources for the representation of new information contents;
- at least one aggregation unit (U4) for the aggregation of punctual evaluations of the level of risk for each possible achievement (R), to obtain a synthesis of the risk calculated in the proximity of the excavation front of said underground work wherein that said aggregation unit (U4) comprises at least one of: at least one module (U41) for the representation of synthesis data along analysis dimensions referable to space; at least one module (U42) for the representation of synthesis data according to the analysis dimensions needed for the assessment and management of the risks, at least one module (U43) for the interactive analysis of data organized according to a multi-dimensional model;
wherein said determination and storage unit (U1) for the determination and storage of the basic parameters comprises extraction means (U12) for extracting the text contained in said documents (D1) in electronic format and syntactic analysis means (U13) of said extracted text for the identification of said plurality of basic parameters, normalization means (U14) of said basic parameters; field mapping means (U15) between said basic parameters and the tables of said database (DB); loading means (U17) of said basic parameters structured on said database (DB), wherein said determination and structured storage unit (U1) comprises field mapping means (U16) for mapping between said basic parameters and the fields of the tables of said database (DB).

2. System (S) according to claim 1, further **characterized by** the fact that said normalization means (U14) comprise at least one of: cleaning means (U141) of the data, processing means (U142) of the data, aggregation means (U143) of the data.

3. System (S) according to one or more of the preceding claims, further **characterized by** the fact that said application unit (U3) comprises at least one of: at least one analytical module (U31) for the implementation of algorithms, at least one interoperability module (U32) adapted to operate with external libraries (L), at least one automatic learning module (U33).

## Patentansprüche

1. Computerimplementiertes System (S) für die Überwachung des Risikoniveaus in der Nähe der Aushubfront einer unterirdischen Baustelle, umfassend
- mindestens eine Bestimmungs- und Speichereinheit (U1) für die Bestimmung einer Mehrzahl von Basisparametern, die für die Berechnung des Risikoniveaus in der Nähe der Aushubfront der unterirdischen Baustelle benötigt werden, mit Mitteln zum Sammeln (U11) einer Mehrzahl von Dokumenten (D1, D2) in elektronischem Format, und für die strukturierte Speicherung der Basisparameter in einer Datenbank (DB), wobei die Dokumente (D1, D2) in elektronischem Format umfassen:
- Dokumente in "geschlossenem Format" (D1), für die keine Bibliotheken für den direkten Zugriff auf die im Dokument selbst enthaltenen strukturierten Daten verfügbar sind;
- Dokumente in "offenem Format" (D2), für die Bibliotheken für den direkten Zugriff auf die im Dokument enthaltenen strukturierten Daten verfügbar sind
- mindestens eine Einheit zum Definieren (U2) einer Mehrzahl von Szenarien, die in der Nähe einer Aushubfront der unterirdischen Baustelle auftreten könnten, ausgehend von den in der Datenbank (DB) gespeicherten Basisparametern;
- mindestens eine Anwendungseinheit (U3) für jedes der während der Definierungsphase erzeugten Szenarien von vordefinierten geomechanischen und hydrogeologischen Modellen für die Berechnung einer Reihe von möglichen Ergebnissen (R) für jedes Szenario, wobei die Anwendungseinheit (U3) mindestens ein automatisches Lernmodul (U33) umfasst, das für die Verarbeitung von Überwachungsdaten (M) von Aushubmaschinen und von Systemen zur Verbesserung der geologischen Bedingungen als Quellen für die Repräsentation von neuen Informationsinhalten konfiguriert ist;
- mindestens eine Aggregationseinheit (U4) für die Aggregation von punktuellen Auswertungen des Risikoniveaus für jedes mögliche Ergebnis (R), um eine Synthese des in der Nähe der Aushubfront der unterirdischen Baustelle berechneten Risikos zu erhalten, wobei die Aggregationseinheit (U4) mindestens eines der Folgenden umfasst: mindestens ein Modul (U41) für die Repräsentation von Synthesedaten entlang von Analysedimensionen, die auf den Raum beziehbar sind; mindestens ein Modul (U42) für die Repräsentation von Synthesedaten gemäß den Analysedimensionen, die für die Bewertung und das Management der Risiken erforderlich sind, mindestens ein Modul (U43) für die interaktive Analyse von Daten, die gemäß einem mehrdimensionalen Modell organisiert sind;
wobei die Bestimmungs- und Speichereinheit (U1) für die Bestimmung und Speicherung der Basisparameter Extraktionsmittel (U12) zum Extrahieren des in den Dokumenten (D1) in elektronischem Format enthaltenen Textes und Mittel zur syntaktischen Analyse (U13) des extrahierten Textes für die Identifizierung der Mehrzahl von Basisparametern sowie Mittel zur Normalisierung (U14) der Basisparameter umfasst; Mittel zum Mappen von Feldern (U15) zwischen den Basisparametern und den Tabellen der Datenbank (DB); Mittel zum Laden (U17) der auf der Datenbank (DB) strukturierten Basisparameter, wobei die Bestimmungs- und strukturierte Speichereinheit (U1) Mittel zum Mappen von Feldern (U16) zum Mappen zwischen den Basisparametern und den Feldern der Tabellen der Datenbank (DB) umfasst.

2. System (S) nach Anspruch 1, ferner **dadurch gekennzeichnet, dass** die Mittel zur Normalisierung (U14) mindestens eines der Folgenden umfassen: Mittel zur Bereinigung (U141) der Daten, Mittel zur Verarbeitung (U142) der Daten, Mittel zur Aggregation (U143) der Daten.

3. System (S) nach einem oder mehreren der vorhergehenden Ansprüche, ferner **dadurch gekennzeichnet, dass** die Anwendungseinheit (U3) mindestens eines der Folgenden umfasst: mindestens ein analytisches Modul (U31) für die Implementierung von Algorithmen, mindestens ein Interoperabilitätsmodul (U32), das dazu ausgebildet ist, mit externen Bibliotheken (L) zu arbeiten, mindestens ein automatisches Lernmodul (U33).

## Revendications

1. - Système (S) mis en œuvre par ordinateur pour la surveillance du niveau de risque à proximité du front d'excavation d'un ouvrage souterrain, comprenant :
- au moins une unité de détermination et de stockage (U1) pour la détermination d'une pluralité de paramètres de base nécessaires au calcul du niveau de risque à proximité du front d'excavation dudit ouvrage souterrain, comprenant des moyens de collecte (U11) d'une pluralité de documents (D1, D2) au format électronique, et pour le stockage structuré desdits paramètres de base à l'intérieur d'une base de données (DB), lesdits documents (D1, D2) au format électronique comprenant :
- des documents (D1) au " format fermé ", pour lesquels il n'y a pas de bibliothèques disponibles pour un accès direct aux données structurées contenues dans le document lui-même ;
- des documents (D2) au " format ouvert ", pour lesquels des bibliothèques sont disponibles pour un accès direct aux données structurées contenues dans le document ;
- au moins une unité de définition (U2) d'une pluralité de scénarios qui pourraient se produire à proximité d'un front d'excavation dudit ouvrage souterrain, à partir desdits paramètres de base stockés sur ladite base de données (DB) ;
- au moins une unité d'application (U3), pour chacun desdits scénarios générés pendant ladite phase de définition, de modèles géo-mécaniques et hydro-géologiques prédéfinis, pour le calcul d'une série de modes de réalisation possibles (R) pour chaque scénario, ladite unité d'application (U3) comprenant au moins un module d'apprentissage automatique (U33) configuré pour traiter des données de surveillance (M) en provenance de machines d'excavation et de systèmes pour l'amélioration de conditions géologiques en tant que sources pour la représentation de nouveaux contenus d'informations ;
- au moins une unité d'agrégation (U4) pour l'agrégation d'évaluations ponctuelles du niveau de risque pour chaque mode de réalisation possible (R), pour obtenir une synthèse du risque calculé à proximité du front d'excavation dudit ouvrage souterrain, ladite unité d'agrégation (U4) comprenant au moins l'un parmi : au moins un module (U41) pour la représentation de données de synthèse selon des dimensions d'analyse référençables à l'espace ; au moins un module (U42) pour la représentation de données de synthèse selon les dimensions d'analyse nécessaires à l'évaluation et à la gestion des risques, au moins un module (U43) pour l'analyse interactive de données organisées selon un modèle multi-dimensionnel ;
dans lequel ladite unité de détermination et de stockage (U1) pour la détermination et le stockage des paramètres de base comprend des moyens d'extraction (U12) pour extraire le texte contenu dans lesdits documents (D1) au format électronique et des moyens d'analyse syntaxique (U13) dudit texte extrait pour l'identification de ladite pluralité de paramètres de base, des moyens de normalisation (U14) desdits paramètres de base ; des moyens de mappage de champs (U15) entre lesdits paramètres de base et les tables sur ladite base de données (DB) ; des moyens de chargement (U17) desdits paramètres de base structurés sur ladite base de données (DB), ladite unité de détermination et de stockage structuré (U1) comprenant des moyens de mappage de champs (U16) pour un mappage entre lesdits paramètres de base et les champs des tables de ladite base de données (DB).

2. - Système (S) selon la revendication 1, **caractérisé en outre par le fait que** lesdits moyens de normalisation (U14) comprennent au moins l'un parmi : des moyens de nettoyage (U141) des données, des moyens de traitement (U142) des données, des moyens d'agrégation (U143) des données.

3. - Système (S) selon une ou plusieurs des revendications précédentes, **caractérisé en outre par le fait que** ladite unité d'application (U3) comprend au moins l'un parmi : au moins un module analytique (U31) pour la mise en œuvre d'algorithmes, au moins un module d'interopérabilité (U32) apte à fonctionner avec des bibliothèques externes (L), au moins un module d'apprentissage automatique (U33).
